# EUROPEAN PATENT SPECIFICATION

(11) **EP 0 667 552 B1**
(45) Date of publication and mention of the grant of the patent: **28.07.1999**
(21) Application number: 94117435.1
(22) Date of filing: 04.11.1994
(51) Int. Cl.: G02C 5/14, G02C 5/22

(54) **Eyeglasses frame**
Brillengestell
Monture de lunettes

(30) Priority: 15.02.1994 JP 4204094
(43) Date of publication of application: 16.08.1995
(73) Proprietor: Yugen Kaisha Moná JAPAN, Corporation, Fukui-shi, Fukui-ken, 918-8016 (JP)
(72) Inventor: Yugen Kaisha Moná JAPAN, Corporation, Fukui-shi, Fukui-ken, 918-8016 (JP)
(74) Representative: VOSSIUS & PARTNER

(56) References cited:
- EP-A- 0 111 621
- WO-A-90/01718
- WO-A-93/22704
- DE-A- 3 821 824
- FR-A- 2 599 155
- US-A- 4 744 646

## Description

The present invention relates to an eyeglasses frame, and more particularly to a temple-to-front hinge Joint of the eyeglasses frame.

A conventional temple-to-front hinge joint uses a hinge of which: one hinge piece is soldered to the rear end of the joint piece of each rim of the front, and the other hinge piece is soldered to the front end of the temple.

The soldering, however, requires skillful, time-consuming work. Particularly in articulating fine temples to fronts, very small hinges must be used. Such minute hinges cannot be made with ease, and disadvantageously areas available for soldering are very small, and therefore, soldering is very difficult. Still disadvantageously the bearing of the hinge is so thin and fragile that hinges are liable to be broken therearound.

Recently there has been an increasing demand for frames of titanium alloys, aluminum, super resilient materials such as nickel-titanium alloys and other special metals that require a special coating process prior to the soldering, which must be effected in a special atmosphere.

FR-A-2 599 155 relates to an eye glasses frame comprising a front and two temples pivotally connected to a joint piece and said joint piece is itself connected to the front. Each temple comprises two branches whose ends are bent downwards and grip from the top and bottom into its through hole in the joint piece.

In view of the above the object of the present invention is to provide an improved temple-to-front articulated joint guaranteed free of such problems as described above.

This object is solved with the features of the claims.

An eyeglasses frame comprising a front and two temples hinged to the opposite sides of the front is improved according to the present invention in that each temple is pivotally connected to an associated joint piece, which is connected to each lens or rim of the front, thus permitting the temple to fold on the front, one of said joint piece and said temple having a bearing integrally connected thereto, said bearing having a through hole or blind hole and a resin hollow plug press-fitted in the through hole or blind hole, thus providing the bearing hole, the other of said joint piece and said temple having a pivot axle integrally connected thereto, said pivot axle being inserted in the bearing hole, said joint piece having an abutment to hold the temple in its opening position relative to the front.

The hollow plug may comprise a hollow cylinder having an annular collar integrally connected to the circumference of one end of the hollow cylinder, which annular collar is pressed against the circumference of the hole of the bearing when pushing the hollow cylinder in the hole of the bearing, so that the pivot axle of the temple may be press-fitted in the hollow plug of the bearing.

The pivot axle may have an antislip piece for gripping the end length of said pivot axle appearing from the bearing hole.

In use each temple rotates about its pivot axle until it abuts on the abutment of the joint piece, thus being kept open to its extremity.

The pivot axle of the temple is prevented positively from slipping off from the bearing hole by the antislip piece, which grips the end of the pivot axle appearing from the lower surface of the bearing.

Other advantages of the present invention will be understood from the following description of eyeglasses frames according to preferred embodiments of the present invention, which are shown in accompanying drawings.
Fig.1 is a side view of eyeglasses using a frame according to a first embodiment of the present invention;
Fig.2 is an exploded view of the temple-to-rim pivotable joint used in the frame structure;
Fig.3 is a sectional view showing details of the pivotable joint;
Fig.4 shows how the temple is folded and opened;
Fig.5 is a side view of eyeglasses using a frame according to a second embodiment of the present invention;
Fig.6 is an exploded view of the temple-to-rim pivotable joint used in the frame structure;
Fig.7 is a sectional view showing details of the pivotable joint;
Fig.8 shows how the temple is folded and opened;
Fig.9 is a side view of eyeglasses using a frame according to a third embodiment of the present invention;
Fig.10 is an exploded view of the temple-to-rim pivotable joint used in the frame structure;
Fig.11 is a sectional view showing details of the pivotable joint;
Fig.12 shows how the temple is folded and opened;
Fig.13 is a side view of eyeglasses using a frame according to a fourth embodiment of the present invention;
Fig.14 is an exploded view of the temple-to-rim pivotable joint used in the frame structure;
Fig.15 is a sectional view showing details of the pivotable joint;
Fig. 16 shows how the temple is folded and opened;
Fig.17 is a side view of eyeglasses using a frame not covered by the scope of the claims ;
Fig.18 is an enlarged view of the temple-to-rim pivotable joint used in the frame structure;
Fig.19 is an exploded view of the temple-to-rim pivotable joint;
Fig.20 is a sectional view showing details of the pivotable joint;
Fig.21 shows how the temple is folded and opened;
Fig.22 is a longitudinal section showing how an antislip grips the pivot axle of the temple;
Fig.23 is a longitudinal section showing how another antislip grips the pivot axle of the temple; and
Fig.24 is a longitudinal section showing that the pivot axle of the temple is inserted in a blind hole.

### (1) First embodiment:

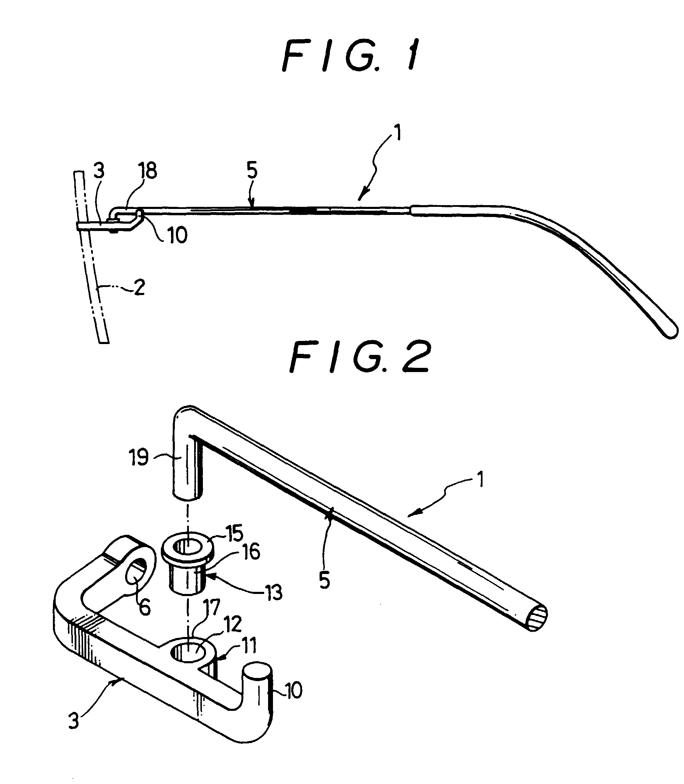

Referring to Figs.1 to 4, an eyeglasses frame 1 according to the first embodiment of the present invention includes a joint piece 3 connected to each lens 2, and an associated temple 5, which is pivotally connected to the end of the Joint piece 3 so as to permit the temple 5 to open and fold on the front.

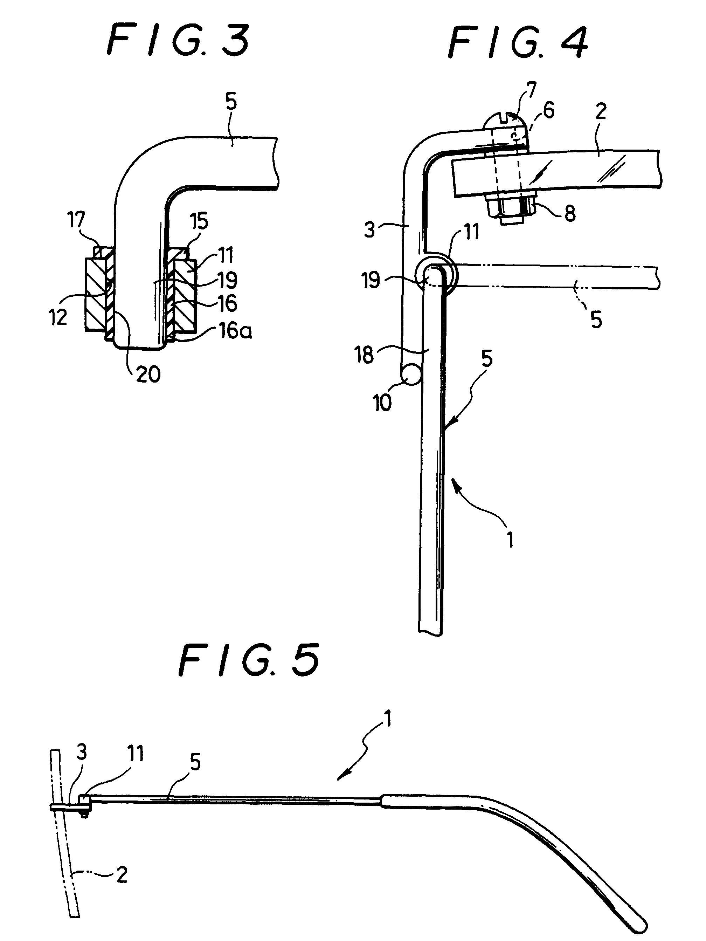

The joint piece 3 has a curved extension ending with an apertured end, and the Joint piece 3 is fixed to the lens 2 by inserting a bolt 7 in the aperture 6 of the curved extension of the Joint piece 3 and an aperture of the lens 2, and by tightening with an associated nut 8. The Joint piece 3 has a abutment 10 rising from its rear end, and an inward-bulged bearing 11 at its intermediate portion. The bearing 11 has an insertion hole 12 made in the form of through hole. A hollow plug 13 of a synthetic resin such as nylon comprises a hollow cylinder 16 and an annular collar 15 integrally connected to one end of the hollow cylinder 16. The hollow plug 13 is press-fitted in the insertion hole 12 until its collar 15 has abutted on the circumference of the insertion hole 12, as seen from Fig.3. The hollow plug 13 may be fixed to the insertion hole 12 by using an adhesive. The longitudinal size of the hollow plug 13 may be long enough to appear somewhat from the lower surface of the bearing as seen from Fig.3. This extra extension is preferable from the angle of stable holding of the pivot axle of the temple 5.

The temple 5 has a descendent pivot axle 19 at its front end, and the pivot axle 19 is press-fitted in the bearing hole 20 as shown in Fig.3. The temple 5 can rotate about its pivot axle with respect to the joint piece 3. As seen from Fig.4, the temple 5 can be folded on the front as shown in phantom lines, and can be opened until it abuts on the rising abutment 10 of the joint piece 3, thus putting the temple 5 in alignment with the joint piece 3, as shown in solid lines.

### (2) Second embodiment:

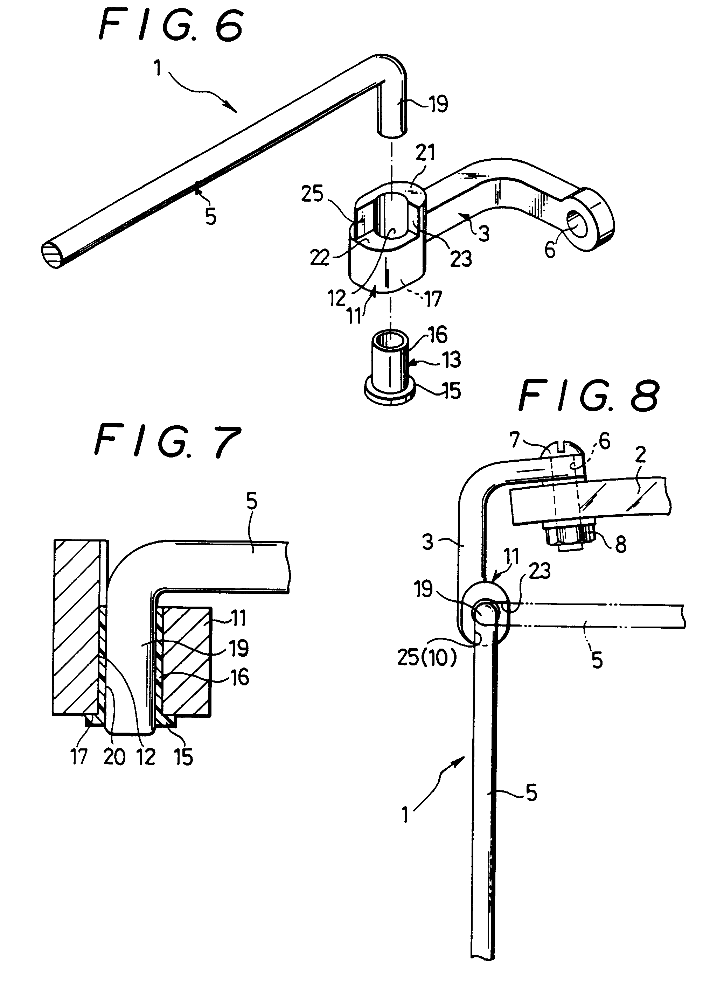

Referring to Figs.5 to 8, an eyeglasses frame 1 according to the second embodiment of the present invention includes a joint piece 3 connected to each lens 2, and an associated temple 5, which is pivotally connected to the end of the joint piece 3.

The joint piece 3 has a curved extension ending with an apertured end, and the Joint piece 3 is fixed to the lens 2 by inserting a bolt 7 in the aperture 6 of the curved extension of the joint piece 3 and an aperture of the lens 2, and by tightening with an associated nut 8. The Joint piece 3 has a bulged bearing 11 at its rear end, and the upper portion 21 of the bulged bearing 11 is notched to open inward and rearward. The bulged bearing 11 has an insertion hole 12 made in the form of through hole. A hollow plug 13 of a synthetic resin such as nylon comprises a hollow cylinder 16 and an annular collar 15 integrally connected to one end of the hollow cylinder 16. The hollow plug 13 is press-fitted in the insertion hole 12 until its collar 15 has abutted on the circumference of the insertion hole 12, as seen from Fig.7. The hollow plug 13 may be fixed to the insertion hole 12 by using an adhesive.

The temple 5 has a descendent pivot axle 19 at its front end, and the pivot axle 19 is press-fitted in the bearing hole 20 as shown in Fig.7. The temple 5 can rotate about its pivot axle with respect to the joint piece 3. As seen from Fig.8, the temple 5 can be folded on the front as shown in phantom lines, and can be opened until it abuts on the rear notched side wall 25, thus putting the temple 5 in alignment with the joint piece 3, as shown in solid lines.

### (3) Third embodiment:

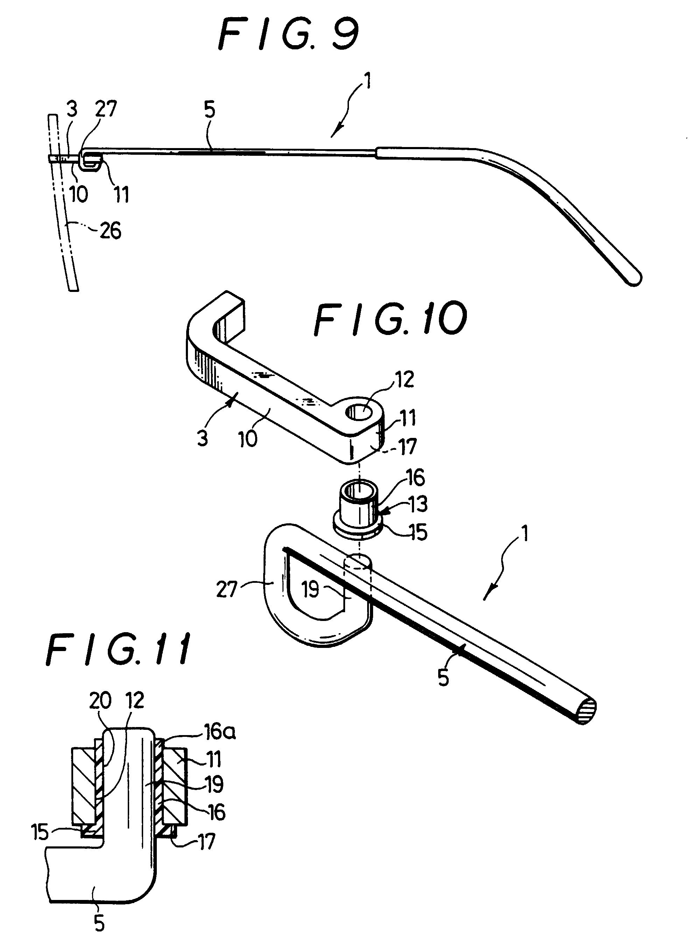

Referring to Figs.9 to 12, an eyeglasses frame 1 according to the third embodiment of the present invention includes a joint piece 3 connected to each rim 26, and an associated temple 5, which is pivotally connected to the end of the joint piece 3.

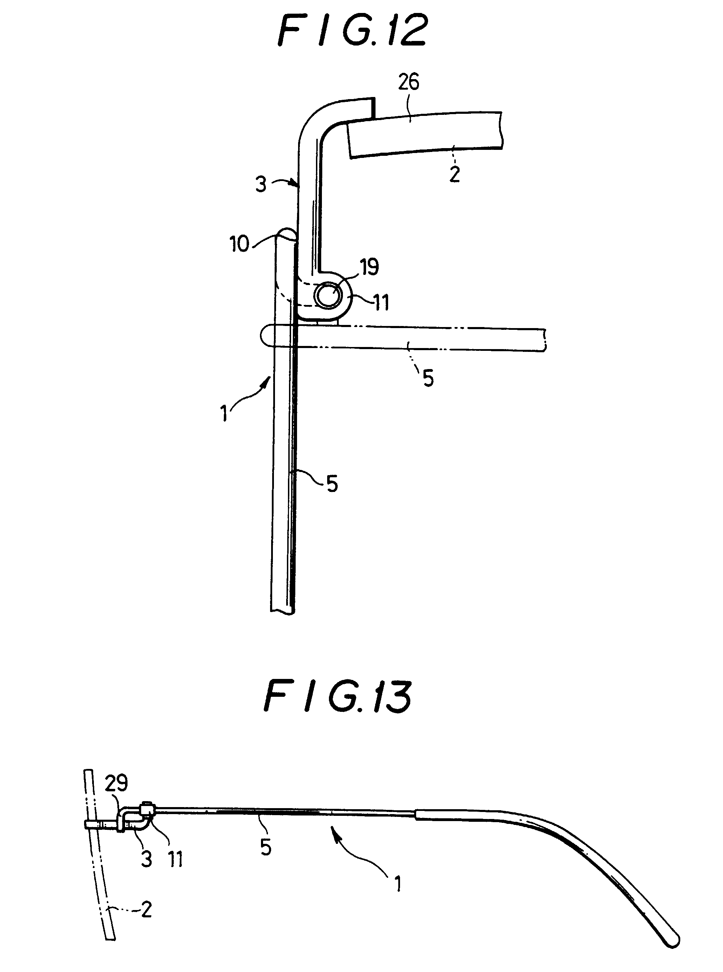

The front end of the Joint piece 3 is soldered to the rim 26 (see Fig.12), and the rear end of the joint piece 3 has an inward bulged bearing 11. It has an insertion hole 12 in the form of through hole. A hollow plug 13 of a synthetic resin such as nylon comprises a hollow cylinder 16 and an annular collar 15 integrally connected to one end of the hollow cylinder 16. The hollow plug 13 is press-fitted in the insertion hole 12 until its collar 15 has abutted on the circumference of the insertion hole 12, as seen from Fig.ll. The hollow plug 13 may be fixed to the insertion hole 12 by using an adhesive. The longitudinal size of the hollow plug 13 may be long enough to appear somewhat from the bearing as seen from Fig.ll. This extra extension 16a is preferable from the angle of stable holding of the pivot axle of the temple 5.

The temple 5 has a descendent, backward, inward and upward extending pivot axle 19 at its front end as shown in Fig.10, and the pivot axle 19 is press-fitted in the bearing hole 20 as shown in Fig.11. The temple 5 can rotate about its pivot axle with respect to the Joint piece 3. As seen from Fig.12, the temple 5 can be folded on the front as shown in phantom lines, and can be opened until its descendent section 27 abuts on the intermediate portion 10 of the joint piece 3, thus putting the temple 5 in alignment with the joint piece 3, as shown in solid lines in Fig.12.

### (4) Fourth embodiment:

In all of the embodiments described above (Figs.1, 5 and 9), the joint piece has a pivot hole and the temple has a pivot axle. Conversely, the joint piece may have a pivot axle, and the temple may have a pivot hole, as for example, follows:

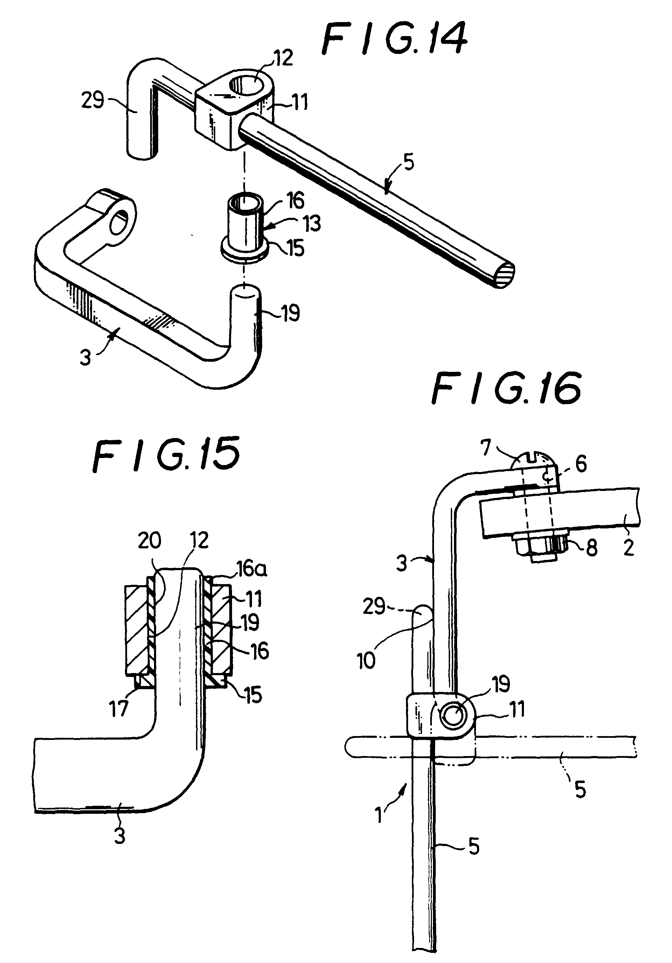

Referring to Figs.13 to 16, the joint piece 3 has a curved extension ending with an apertured end, and the joint piece 3 is fixed to the lens 2 by inserting a bolt 7 in the aperture 6 of the curved extension of the joint piece 3 and an aperture of the lens 2, and by tightening with an associated nut 8. The joint piece 3 has a pivot axle 19 rising from its rear end. On the other hand the temple 5 has a descending extension from its front end, and a bearing 11 integrally connected to a selected portion close to the front end of the temple 5. The bearing 11 has a through hole 12. A hollow plug 13 of a synthetic resin such as nylon comprises a hollow cylinder 16 and an annular collar 15 integrally connected to one end of the hollow cylinder 16. The hollow plug 13 is press-fitted in the insertion hole 12 until its collar 15 has abutted on the circumference 17 of the insertion hole 12, as seen from Fig.15. If occasions demand, the longitudinal size of the hollow plug 13 may be selected to be long enough to appear somewhat from the upper circumference of the insertion hole 12 of the bearing as seen from Fig.15. This extra extension 16a is preferable from the angle of the stable holding of the pivot axle of the temple 5.

The pivot axle 19 is press-fitted in the bearing hole 20 as shown in Fig.15. Then, the temple 5 can rotate about its pivot axle with respect to the joint piece 3. As seen from Fig.16, the temple 5 can be folded on the front as shown in phantom lines, and can be opened until its descendent end 29 abuts on the intermediate portion 10 of the joint piece 3, thus putting the temple 5 in alignment with the joint piece 3, as shown in solid lines in Fig.16.

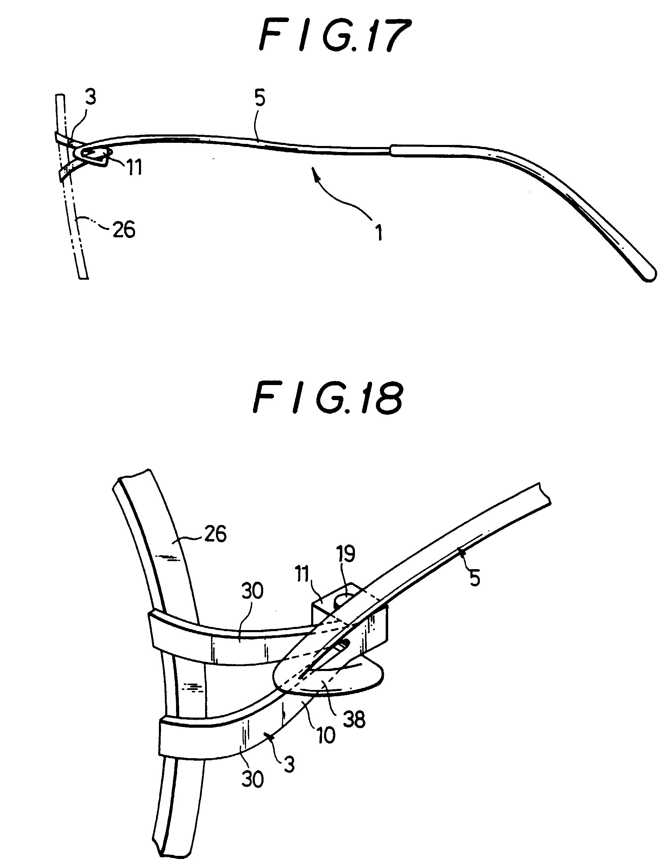

Referring to Figs.17 to 21, an alternative eyeglasses frame 1, not covered by the scope of claim which permits the adjusting of the opening-and-folding tightness of the temple includes a joint piece 3 connected to each rim 26 and an associated temple 5 whose front end is pivotally connected to the joint piece 3.

The joint piece 3 comprises a cubic bearing 11 having a bifurcate extension 30 integrally connected thereto. The front ends of the two branches of the bifurcate extension 30 are soldered to the rim 26. The bearing 11 has a through hole 31 at its center and a cross tapped-hole 32 at its rear end surface to communicate with the vertical bearing hole 31.

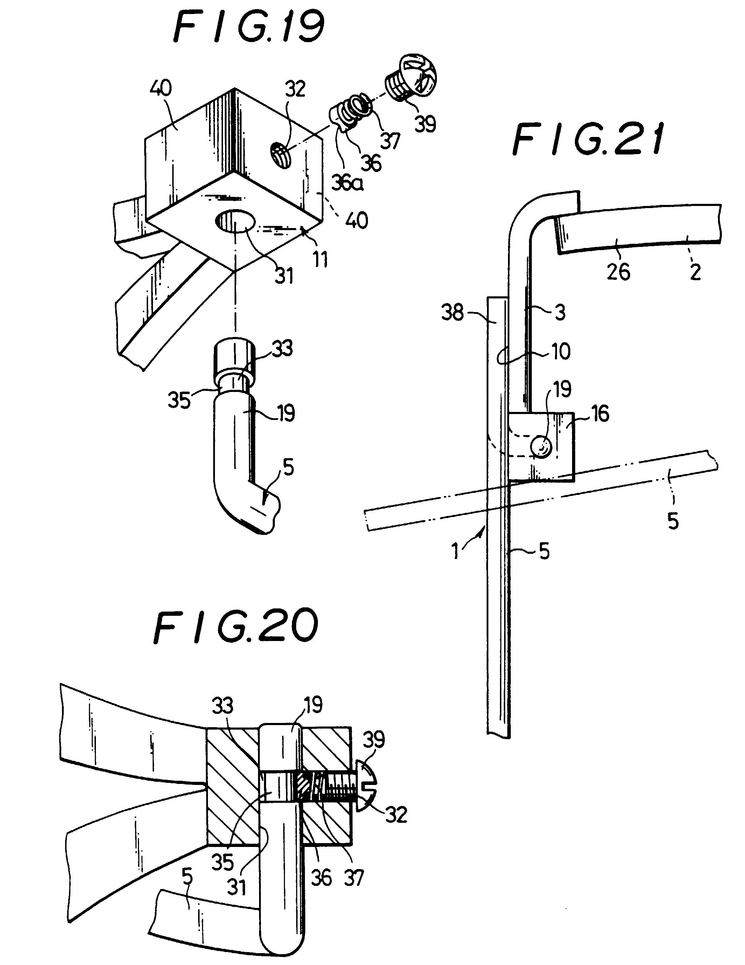

On the other hand the temple 5 has a backward-bent length and an upright pivot axle 19. The upright pivot axle 19 has a circumferential groove 33. As seen from Fig.20, the circumferential groove 33 faces the cross tapped-hole 32 when the upright axle 19 is inserted in the through hole 31 of the cubic bearing 11. The tapped-hole 32 has a coiled spring 37 to push a fitting piece 36 against the bottom 35 of the circumferential groove 33 when a screw 39 is driven in the tapped-hole 32, as seen from Figs.19 and 20. The screw 39 has the effect of controlling the compressing of the coiled spring 37. The fitting piece 36 has a concave surface 36a to fit the grooved circumference 35 of the pivot axle 19.

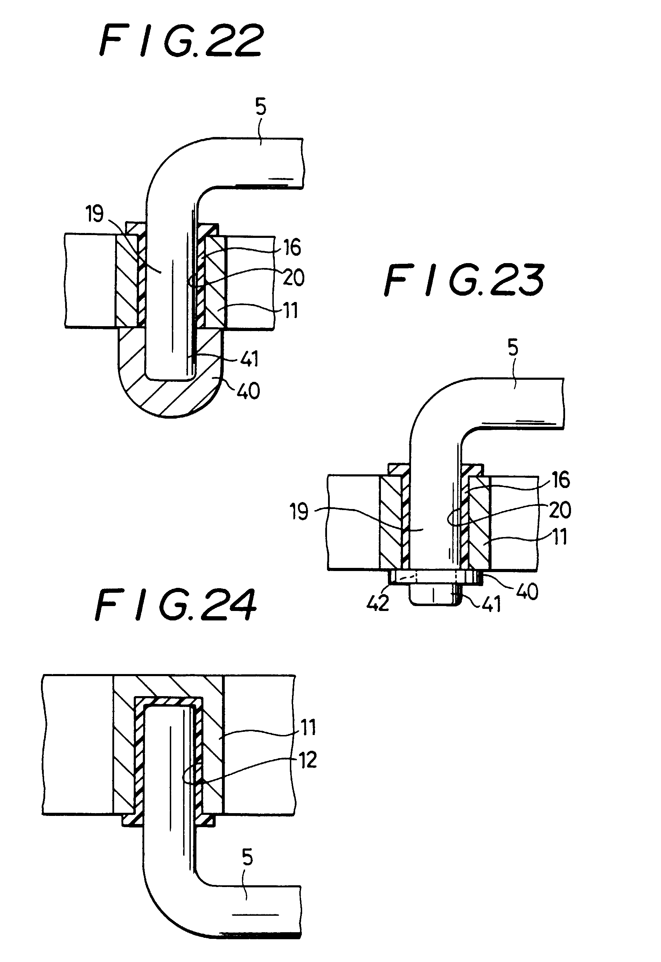

The tightness with which the temple 5 rotates can be adjusted by driving the screw 39 in the tapped-hole 32, thereby adjusting the pushing force to apply the coiled spring 37. As seen from Fig.21, the temple 5 can be folded on the front as shown in phantom lines, and can be opened until its rearward-bent portion 38 abuts on the intermediate portion 10 of the joint piece 3, thus putting the temple 5 in alignment with the joint piece 3, as shown in solid lines in Fig.21.

In this particular frame the fitting piece 36 can be omitted, thereby permitting the coiled spring 37 to be applied directly to the groove bottom 35. The coiled spring 37 and the fitting piece 36 can be omitted, thereby permitting the screw 39 to be applied directly to the groove bottom 35.

In this frame the circumferential groove of the pivot axle and the screw along with the coiled spring and the fitting piece together assure that the pivot axle cannot be slipped off from the bearing.

The tapped-hole 32 may be made in a selected side surface 40 of the cubic bearing 11 (see Fig.19). Conversely the temple may have a pivot hole, and the joint piece may have a pivot axle and then, the frame structure would have a reversed relation with Fig.17.

### (5) Other embodiments:

① If the pivot axle is press-fitted in the pivot hole, it is difficult to remove the pivot axle from the pivot hole. If the pivot axle 19 is fixed to the pivot hole 20 by applying an antislip piece 40 to the end of the pivot axle 19 appearing from the pivot hole 20, as seen from Fig.22, or if the pivot axle 19 is fixed to the pivot hole 20 by applying an antislip piece 40 in the form of snap ring to the circumference groove 42 of the end of the pivot axle 19 appearing from the pivot hole 20, as seen from Fig.23, the pivot axle 19 can be positively prevented from slipping off from the pivot hole 20, still permitting removal of the pivot axle 19 from the pivot hole 20. If it is desired that the tightness with which each temple is opened and folded on the front is controlled with the aid of adjustable screw, and if it is difficult or inconvenient to make a circumferential groove on the pivot axle in alignment with the screw, use is made of an antislip piece as shown in Figs.22 and 23.
② The pivot hole in which the pivot axle is inserted may be a blind hole as shown in Fig.24.
③ As for the hollow plug it is shown as a collared cylindrical shape, but it can be a block having an aperture. If it has a collar, it should be pushed in the pivot hole until its collar has abutted on the circumference of the pivot hole to assure that it is completely inserted in the pivot hole. Preferably the collar is thick enough to provide a substantial longitudinal extension of the hollow cylindrical size to accomodate the pivot axle, accordingly increasing the stableness with which the pivot axle can be held. Preferably the hollow plug is pushed in the pivot hole in the same direction as the pivot axle is inserted in the pivot hole as seen from Figs.3, 11 and 15; when the pivot axle is inserted in the hollow plug, the pushing force can have no component to remove the hollow plug from the pivot hole.
④ The pivot axle can be integrally formed by press-molding other than bending.

As may be understood from the above, in an eyeglasses frame according to the present invention one of the joint piece and the temple has a pivot hole, and the other of the joint piece and the temple has a pivot axle, and therefore, the pivot joint can be provided without recourse to soldering. Accordingly frames can be assembled at an increased efficiency, and still advantageously frames can be easily made of titanium, aluminum or super resilient materials such as nickel-titanium alloys, which are difficult to be soldered.

Frames can be made easily of fine linear materials thanks to no soldering required. When the temple-to-joint piece connection is loose, such connection can be tightened by driving associated adjustable screws.

## Claims

1. An eyeglasses frame comprising a front and two temples hinged to the opposite sides of the front, each temple (5) being pivotally connected to an associated joint piece (3), which is arranged to be connected to each lens or is connected to each rim (2) of the front, thus permitting the temple (5) to fold on the front, one of said joint piece (3) and said temple (5) having a bearing (11) integrally connected thereto, said bearing (11) having a through hole or blind hole (12) and a resin hollow plug (16) press-fitted in the through hole or blind hole (12), thus providing a bearing hole (20), characterized in that the other of said joint piece (3) and said temple (5) has a pivot axle (19) integrally connected thereto, said pivot axle (19) being inserted in the bearing hole (20), said joint piece (3) having an abutment (10) to hold the temple in its opening position relative to the front, said hollow plug (16) comprises a hollow cylinder (13) having an annular collar (15) integrally connected to the circumference of one end of the hollow cylinder (13), which annular collar (15) is pressed against the circumference of the through hole or blind hole (12) of the bearing (11) when pushing the hollow cylinder (13) into the hole (12) of the bearing (11), so that the pivot axle (19) of the temple (5) is press-fitted in the hole of the hollow plug (16).

2. An eyeglasses frame according the claim 1, wherein said pivot axle (19) has an antislip piece (40) gripping the end portion (41) of said pivot axle appearing from the bearing hole (20).

## Patentansprüche

1. Brillengestell, das eine Vorderseite und zwei Bügel aufweist, die an entgegengesetzten Seiten der Vorderseite gelenkig befestigt sind, wobei jeder Bügel (5) drehbar mit einem zugehörigen Gelenkstück (3) verbunden ist, das so angeordnet ist, daß es mit jeder Linse verbunden ist oder mit jeder Einfassung (2) der Vorderseite verbunden ist, wobei es auf diese Weise ermöglicht wird, den Bügel (5) auf die Vorderseite zusammenzulegen, wobei entweder das Gelenkstück (3) oder der Bügel (5) ein integral damit verbundenes Lager (11) haben, wobei das Lager (11) ein Durchgangsloch oder Sackloch (12) und einen hohlen Kunstharzstöpsel (16) hat, der in das Durchgangsloch oder Sackloch (12) preßgepaßt ist, wobei auf diese Weise ein Lagerloch (20) geliefert wird, dadurch gekennzeichnet, daß das andere Teil, das Gelenkstück (3) oder der Bügel (5), eine integral damit verbundene Drehachse (19) hat, wobei die Drehachse (19) in das Lagerloch (20) eingeführt ist, wobei das Gelenkstück (3) ein Widerlager (10) hat, um den Bügel in seiner Öffnungsposition relativ zur Vorderseite zu halten, wobei der hohle Stöpsel (16) einen Hohlzylinder (13) mit einer ringförmigen Manschette (15) aufweist, welche integral mit dem Umfang eines Endes des Hohlzylinders (13) verbunden ist, wobei die ringförmige Manschette (15) gegen den Umfang des Durchgangslochs oder Sacklochs (12) des Lagers (11) gedrückt wird, wenn der Hohlzylinder (13) in das Loch (12) des Lagers (11) gedrückt wird, so daß die Drehachse (19) des Bügels (5) in das Loch des hohlen Stöpsels (16) preßgepaßt wird.

2. Brillengestell nach Anspruch 1, wobei die Drehachse (19) ein rutschfestes Stück (40) hat, das den Endabschnitt (41) der Drehachse greift, die aus dem Lagerloch (20) herauskommt.

## Revendications

1. Une monture de lunettes comprenant une partie avant et deux branches articulées aux côtés opposés de la partie avant, chaque branche (5) étant reliée de façon pivotante à une pièce de liaison associée (3) qui est agencée pour être reliée à chaque verre ou est reliée à chaque rebord (2) de la partie avant, permettant ainsi à la branche (5) de se replier sur la partie avant, l'une de ladite pièce de liaison (3) et de ladite branche (5) ayant un support (11) relié de façon solidaire à celle-ci, ledit support (11) ayant un trou traversant ou un trou borgne (12) et un bouchon creux en résine (16) adapté à force dans le trou traversant ou dans le trou borgne (12), fournissant ainsi un trou de support (20), caractérisé en ce que l'autre de ladite pièce de liaison (3) et de ladite branche (5) présente un axe de pivotement (19) relié de façon solidaire à celle-ci, ledit axe de pivotement (19) étant inséré dans le trou de support (20), ladite pièce de liaison (3) ayant une butée (10) pour maintenir la branche dans sa position d'ouverture par rapport à la partie avant, ledit bouchon creux (16) comprend un cylindre creux (13) ayant un collier annulaire (15) relié de façon solidaire à la circonférence d'une extrémité du cylindre creux (13), lequel collier annulaire (15) est pressé contre la circonférence du trou traversant ou du trou borgne (12) du support (11) lors de l'introduction du cylindre creux (13) dans le trou (12) du support (11) si bien que l'axe de pivotement (19) de la branche (5) est adapté à force dans le trou du bouchon creux (16).

2. Monture de lunettes selon la revendication 1, dans laquelle ledit axe de pivotement (19) comporte une pièce anti-glissement (40) saisissant la partie d'extrémité (41) dudit axe de pivotement apparaissant à partir du trou de support (20).
